(19) Europäisches Patentamt
European Patent Office
Office européen des brevets

(11) **EP 4 404 187 A1**

(12) **EUROPEAN PATENT APPLICATION**

(43) Date of publication:
**24.07.2024 Bulletin 2024/30**

(21) Application number: **23152871.2**

(22) Date of filing: **23.01.2023**

(51) International Patent Classification (IPC):
**G10L 15/16** (2006.01)   **G10L 15/28** (2013.01)

(52) Cooperative Patent Classification (CPC):
**G10L 15/16; G10L 15/28**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Longgang District,
Shenzhen,
Guangdong 518129 (CN)**

(72) Inventors:
• **Jingbiao, Mei**
  **80992 Munich (DE)**
• **Zhang, Zixing**
  **80992 Munich (DE)**

(74) Representative: **MERH-IP Matias Erny Reichl
Hoffmann
Patentanwälte PartG mbB
Paul-Heyse-Strasse 29
80336 München (DE)**

Remarks:
Amended claims in accordance with Rule 137(2)
EPC.

(54) **APPARATUS AND METHOD FOR STREAMING AUTOMATIC SPEECH RECOGNITION**

(57)     Described is an apparatus (113, 700) for performing streaming automatic speech recognition for a stream of acoustic signals (115, 207), the apparatus comprising one or more processors (111, 701) configured to perform steps comprising: receiving (601) sequential acoustic features (208) extracted from the stream of acoustic signals (115, 207); and processing (602) the sequential acoustic features (208) using a plurality of depth-wise convolution processes (402, 501) to form a series of signals (210), each signal representing a hypothesis of speech represented by the sequential acoustic features (208). This may allow for a more computationally efficient automatic speech recognition system with good accuracy.

FIG. 5

**Description**

**FIELD OF THE INVENTION**

This invention relates to automatic speech recognition systems, for example for voice assistant applications.

**BACKGROUND**

Automatic speech recognition (ASR) methods transcribe human speech into text. The text output from an ASR model is called the transcript of speech. ASR uses an audio signal containing human speech as input and generates the transcript based on the audio signal. The audio signal may be digital or analog. ASR can be used in various applications, such as subtitle generation and voice assistance. Streaming ASR is a variant of ASR, where the aim is to generate the accurate transcription in real time.

Streaming ASR can be used on edge devices, such as smart phones, smart speakers and smart cars. The resources and hardware capability of these devices are restricted. Therefore, it is desirable to keep the system compact, i.e., with a small model size, small computational costs and low inference latency, while keeping a relatively high recognition accuracy.

A prior model known as RNN-T, as described in Graves, A., "Sequence Transduction with Recurrent Neural Networks", 2012, http://arxiv.org/abs/1211.3711, is suitable for streaming ASR. Due to the success of the so-called Transformer model (see Vaswani, A., Shazeer, N., Parmar, N., Uszkoreit, J., Jones, L., Gomez, A. N., Kaiser, L., and Polosukhin, I., "Attention Is All You Need", 2017, arXiv. https://doi.org/10.48550/arxiv.1706.03762) in a range of natural language processing tasks and its ability for parallel computation, most current streaming edge-to-edge ASR systems use a combination of RNN-T and Transformer-based models. However, the inference latency and large computational cost of Transformer's self-attention mechanism make these systems generally unsuitable for edge deployment. For example, the self-attention mechanism takes more than 30% of the total parameters and more than 50% of the total inference time.

A range of methods have been proposed to reduce the inference time for ASR models. These methods may be divided into techniques which optimize the transducer encoder and optimize the transducer decoder (i.e., the transducer predictor).

For optimizing the transducer predictor, there have a been a range of light architectures developed with the aim of reducing the inference latency for the vanilla Transformer transducer predictor. For example, a stateless RNN-T predictor (as described in Ghodsi, M., Liu, X., Apfel, J., Cabrera, R., and Weinstein, E., "Rnn-Transducer with Stateless Prediction Network", ICASSP 2020 - 2020 IEEE International Conference on Acoustics, Speech and Signal Processing (ICASSP), 00, 7049-7053, https://doi.org/10.1109/icassp40776.2020.9054419) and a tied and reduced RNN-T predictor (as described in Botros, R., Sainath, T. N., David, R., Guzman, E., Li, W., and He, Y., "Tied and Reduced RNN-T Decoder", 2021, arXiv. https://doi.org/10.21437/interspeech.2021-212). However, in such techniques the transducer encoder occupies more than 70% of the total inference time. Thus, only optimizing the inference time for the predictor is generally not enough.

Reducing the inference time for the encoder is difficult, as the attention mechanism is believed to be the key component that allows Transformer-based architectures, such as Transformer Transducer (as described in Zhang, Q., Lu, H., Sak, H., Tripathi, A., McDermott, E., Koo, S., and Kumar, S. (n.d.), "Transformer Transducer: A Streamable Speech Recognition Model with Transformer Encoders and RNN-T Loss", https://arxiv.org/abs/2002.02562) and Conformer Transducer (as described in Gulati, A., Qin, J., Chiu, C.-C., Parmar, N., Zhang, Y., Yu, J., Han, W., Wang, S., Zhang, Z., Wu, Y., and Pang, R., "Conformer: Convolution-augmented Transformer for Speech Recognition", 2020, arXiv. https://doi.org/10.48550/arxiv.2005.08100) produce state-of-the-art results. Thus, most compression approaches avoid optimizing the latency for the attention layer for the encoder, but try to shrink the number of layers and parameters, which can lead to significant accuracy degradation. One method to reduce the overall self-attention latency is to use shared attention mapping across different layers. By reusing the attention mapping, the amount of computation may be reduced. However, this can lead to a performance loss and additionally, has been shown to not reduce inference time.

It is desirable to develop an apparatus and method for streaming ASR that has a lighter neural network architecture, but that still delivers comparable recognition accuracy to state-of-the-art techniques.

**SUMMARY OF THE INVENTION**

According to a first aspect, there is provided an apparatus for performing streaming automatic speech recognition for a stream of acoustic signals, the apparatus comprising one or more processors configured to perform steps comprising: receiving sequential acoustic features extracted from the stream of acoustic signals; and processing the sequential acoustic features using a plurality of depth-wise convolution processes to form a series of signals, each signal representing a hypothesis of speech represented by the sequential acoustic features.

This may allow for a more computationally efficient automatic speech recognition system with good accuracy.

The one or more processors may be further configured to perform steps comprising: identifying a plurality of acoustic segments from the sequential acoustic features; performing convolutional processing on each acoustic segment to form intermediate data; and processing the intermediate data using the plurality of depth-wise convolution processes to form the series of signals. Performing convolutional processing before processing the data using the plurality of depth-wise convolution processes may result in a more computationally efficient process.

The one or more processors may be further configured to perform steps comprising: identifying a plurality of acoustic segments from the sequential acoustic features; and processing the plurality of acoustic segments using the plurality of depth-wise convolution processes to form the series of signals. The one or more processors may be configured to identify the plurality of acoustic segments from the sequential acoustic features by applying a sliding window to the sequential acoustic features. The sliding window may have a constant size. This may allow the sequential acoustic features to be split into a plurality of shorter acoustic segments.

The plurality of depth-wise convolution processes may each comprise applying a depth-wise convolution. During the processing of the sequential acoustic features using the plurality of depth-wise convolutions, each of the depth-wise convolutions may be applied to the sequential acoustic features or data derived therefrom, such as the acoustic segments, or acoustic data that has been processed by another convolution. Each depth-wise convolution may have a respective different kernel size. This may allow the apparatus to extract meaningful and variable context-length features from the acoustic signal. This may allow the transducer model to reduce the number of parameters, inference time and computational costs.

The one or more processors may be configured to perform the plurality of depth-wise convolution processes on a time-restricted subset of the stream of acoustic data and to thereby form a hypothesis of speech contained within the corresponding acoustic features in that time-restricted subset. This may allow the apparatus to perform automatic speech recognition on a particular subset of the data over a particular time range.

The plurality of depth-wise convolution processes may be attention-free former processes. Therefore, the plurality of depth-wise convolution processes may not comprise an attention mechanism. This may allow the process to be computationally efficient.

Processing the sequential acoustic features using the plurality of depth-wise convolution processes may comprise, in order: inputting the sequential acoustic features to a first layer normalisation layer; and inputting the output of the first layer normalisation layer to a multi-head depth-wise convolution layer configured to operate on data output from the first layer normalisation layer. The apparatus may therefore use a pre-layer normalisation architecture, which may give improved results compared to the post-layer normalization used in prior transformer techniques.

The one or more processors may be configured to concatenate the outputs of each head of the multi-head depth-wise convolution. This may allow the apparatus to form higher dimension acoustic features.

Processing the sequential acoustic features may further comprise inputting the output of the multi-head depth-wise convolution layer to, in order, the following layers: a first dropout layer; a second layer normalisation layer; one or more feedforward layers; and a second dropout layer. This may be a computationally efficient implementation.

Each head of the multi-head depth-wise convolution may be configured to apply a different one-dimensional depth-wise convolution kernel to the output of the first normalization layer. This may allow the apparatus to extract meaningful and variable context-length features from the acoustic signal.

The multi-head depth-wise convolution layer may have a variable cache size. This may allow the cache to accommodate data of different intermediate dimensions. This is in contrast to previous ASR models, which have a constant cache size

The multi-head depth-wise convolution may include a channel projection layer to map extracted acoustic features having a higher dimension than a base dimension to the base dimension. This may allow the model to achieve comparable prediction performance compared to models that use self-attention layers, while requiring fewer parameters, less inference time and computational costs.

The plurality of depth-wise convolution processes may each comprise a causal convolution padding. This may allow the system to not look into acoustic frames in the future, and thus the technique does not require future context to perform speech recognition. This may allow the system to have lower structure latency.

The processing of the sequential acoustic features using the plurality of depth-wise convolution processes to form the series of signals may be performed by a transducer encoder and/or decoder. This may allow the model size to be kept small whilst achieving improved results and keeping the latency low.

The apparatus may be configured to receive the stream of acoustic signals from a microphone. This may be a convenient implementation in edge devices.

The apparatus may be configured to perform as a speech to text converter, a voice assistant, a caption generator or a voice input system in response to the stream of acoustic speech signals. This may allow the apparatus to be used in an electronic device incorporating a speech assistant function, such as smartphones.

According to another aspect, there is provided a computer-implemented method for performing streaming automatic speech recognition for a stream of acoustic signals, the method comprising: receiving sequential acoustic features extracted from the stream of acoustic signals; and processing the sequential acoustic features using a plurality of depth-wise convolution processes to form a series of signals, each signal representing a hypothesis of speech represented by the sequential acoustic features.

This may allow for a more computationally efficient automatic speech recognition method with good accuracy.

According to a further aspect, there is provided a computer program comprising instructions that when executed by a computer cause the computer to perform the method above.

According to a further aspect, there is provided a computer-readable storage medium having stored thereon computer readable instructions that when executed at a computer (for example, comprising one or more processors) cause the computer to perform the method above. The computer-readable storage medium may be a non-transitory computer-readable storage medium. The computer may be implemented as a system of interconnected devices.

## BRIEF DESCRIPTION OF THE FIGURES

The present invention will now be described by way of example with reference to the accompanying drawings.

In the drawings:

Figure 1 schematically illustrates an exemplary streaming automatic speech recognition system configured for voice interaction with a user.

Figure 2 illustrates a flowchart describing the operation of an exemplary system.

Figure 3 is a schematic view of an exemplary AttFreeFormer-Transducer (AFF-T) speech recognition model with an AttFreeFormer block as an encoder and predictor.

Figure 4 is a schematic view of an exemplary AttFreeFormer neural network architecture for streaming automatic speech recognition.

Figure 5 illustrates an exemplary neural network architecture of a multi-head depth-wise convolution in the AttFreeFormer block.

Figure 6 shows a flowchart illustrating the steps of an example of a method of performing streaming automatic speech recognition.

Figure 7 shows an example of an apparatus for performing streaming automatic speech recognition and some of its associated components.

## DETAILED DESCRIPTION

Described herein is an end-to-end streamable automatic speech recognition system based on an attention-free transducer, referred to herein as an Attention Free Former-transducer, or AttFreeFormer-transducer (AFF-T). This system can perform end-to-end training and inference processes for automatic speech recognition. The system may advantageously achieve an accurate recognition using only a small footprint, compared to prior approaches.

One or more processors of the system are configured to implement a streaming speech recognition model. In the approach described herein, the streaming speech recognition model comprises an AttFreeFormer encoder and/or an AttFreeFormer decider (predictor) block. These blocks do not comprise an attention mechanism (in particular, a self-attention mechanism), and therefore the encoder and decoder block, and the streaming speech recognition model, are attention-free.

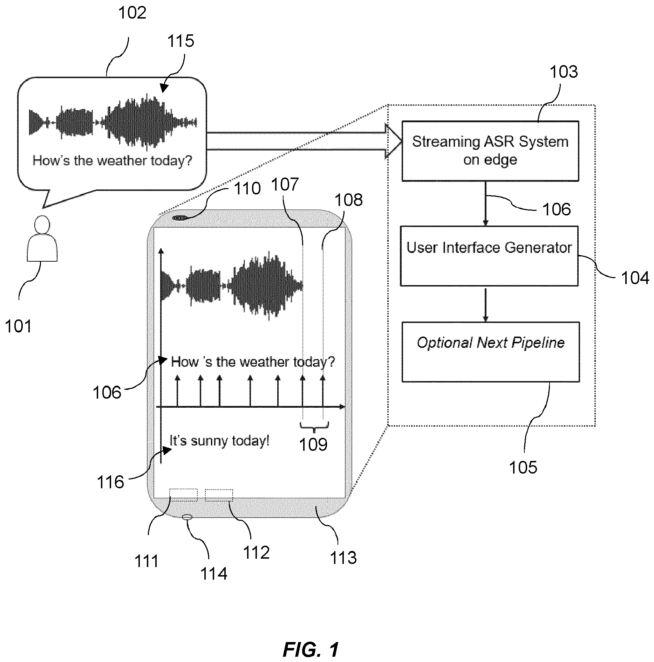

Referring to FIG. 1, an exemplary speech environment 100 includes an automatic speech recognition system 103 that is implemented on a user device 113 of a user 101. Although the user device 113 is depicted as a smartphone in FIG. 1, the user device 113 may correspond to any type of computing device such as, without limitation, a laptop or desktop computer, a tablet, a wearable device, a smart speaker/display, a smart appliance, an automotive infotainment system, a digital assistant device or an Internet-of-Things (IoT) device. The device preferably comprises an audio capture device 110 (for example, a microphone).

The user device 113 includes data processing hardware 111 and memory hardware 112 in communication with the data processing hardware 111 and stores instructions, that when executed by the data processing hardware 111, cause the data processing hardware 111 to perform one or more operations. The data processing hardware 111 is configured to implement the streaming automatic speech recognition model.

In this example, the user device 113 includes an audio capture device, in this case, a microphone 110 for capturing and converting spoken utterances 102 within the speech environment 100 into electrical signals. Within the audio capture device 110, an environmental noise suppressing processor may be configured. A speech output device, in this case a speaker, is equipped to communicate an audible audio signal, i.e., output audio data from the user device 113. Although the example here shows a single audio capture device 110, the user device 113 may implement a number of audio capture devices 110. One or more capture devices 110 may not physically reside on user device 113, but may be communicatively connected (for example, in wireless or wired communication) with the user device 113.

The user device 113 is configured to implement a streaming automatic speech recognition (ASR) system 103 comprising the streaming automatic speech recognition model. The system 103 is configured to receive an utterance 102 spoken by the user 101 and convert the utterance into a sequence of digital signals that can be processed by the ASR system 103. For example, the question "How's the weather today?" spoken by the user 101 in the English natural language is fed into the ASR system 103 as a sequence of acoustic frames 115. Thereafter, the ASR system 103 receives, as input, the acoustic frames 115 corresponding to the utterance 102, and generates i.e., predicts, as output, a corresponding transcript (e.g., recognition result or hypothesis of speech) 106 of the utterance 102. The time difference between when the user 101 stops talking, i.e., end of speech (EOS) 107 and when the last token of the transcript i.e., end of transcript 108 is transcribed represents the total user experienced latency 109 of the ASR system 103. The latency 109 is therefore the delay between the end of speech 107 and the end of transcript 108.

In FIG. 1, the user device 113 is also configured to implement a user interface generator 104. The user interface generator 104 in this case may represent a voice input system or a real-time caption generator. The user interface generator may be configured to present a representation of the transcript 106 of the utterance 102 to the user 101 of the user device 113. In some configurations, the ASR output transcript 106 is fed into an optional next pipeline 105, in which a natural language understanding module is executed on the user device 113 to execute a user command. For example, in the configuration of a voice assistant, the optional next pipeline 105 executes a dialog generation system to generate a response utterance 116 based on the transcript 106 (e.g. a user command) recognized by the ASR system 103. Additionally or alternatively, a text-to-speech system executed on the user device 113 may convert the response utterance 116 into synthesized speech for audible output by a speaker 114 installed on the user device 113, or alternatively, a wireless speaker.

Therefore, the output of the model may be provided to, for example, a speech to text converter, a voice assistant, a caption generator and or voice input system.

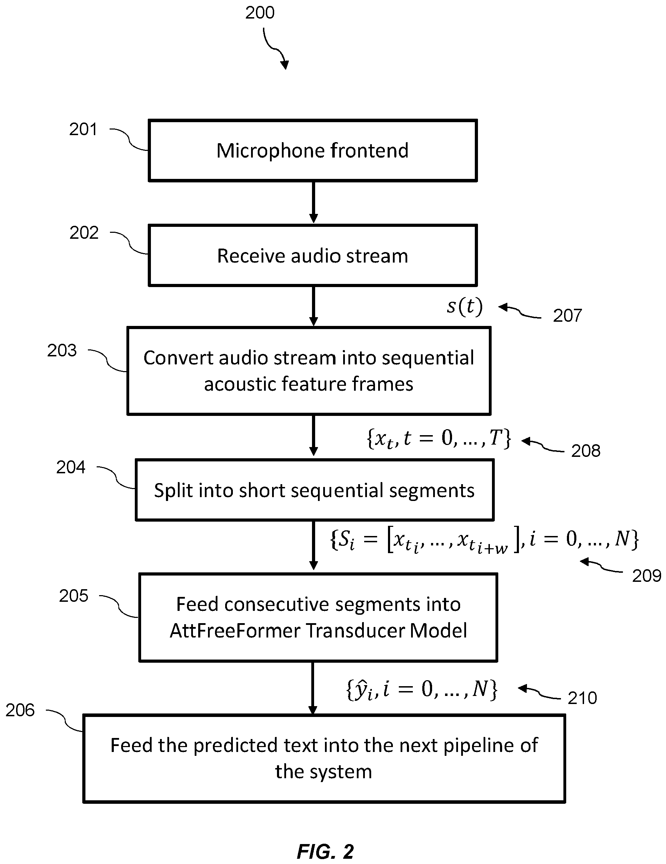

An exemplary pipeline of the streaming ASR system 200 is shown in FIG 2. The microphone frontend 201 may include a noise reduction filter and/or a frequency filter. The audio stream pipeline receives the audio signal $s(t)$, 207, at 202. At 203, a feature extractor converts the audio stream 207 into sequential acoustic features $\{x_t, t = 0, ..., T\}$ 208. A 204, the acoustic features 208 are split into shorter sequential segments (for example by applying a sliding window, preferably with a fixed window size and with a fixed step size) $\{S_i = [x_{t_i},...,x_{t_i+w}], i = 0, ..., N\}$ 209.

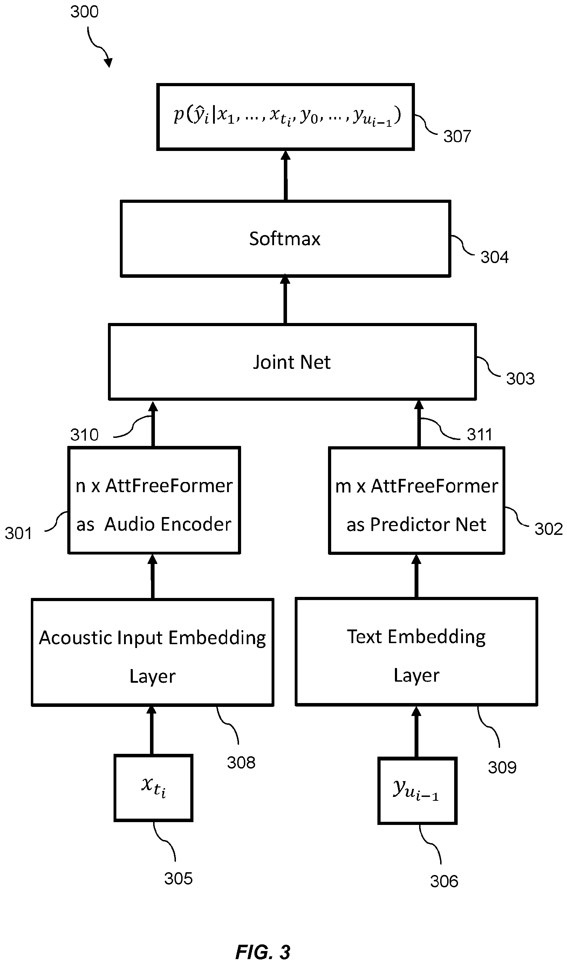

The consecutive segments 209 are then fed into the AttFreeFormer transducer model at 205 to generate tokens $\{\hat{y}_i, i = 0,...,N\}$ 210 indicating a predicted utterance, recognition results or hypothesis. The AttFreeFormer transducer model used at 205 is described in more detail below with reference to FIG. 3. The tokens $\{\hat{y}_i, i = 0, ..., N\}$ 210 may be fed into a subsequent pipeline at 206. The subsequent pipeline used at 206 may, for example, be a natural language understanding and/or natural language generation and/or text to speech processing tool.

The system can therefore detect an audio stream, for example with a microphone, and receive a stream of acoustic signals. The system can convert the audio stream into sequential acoustic features, split the acoustic frames into short sequential segments (for example, by applying a sliding fixed-length window) input the consecutive segments into the streaming automatic speech recognition model (the AttFreeFormer transducer model in Figure 2), and optionally input the recognized text into the next system pipeline. The AttFreeFormer transducer model maybe configured to include AttFreeFormer blocks as the transducer encoder and AttFreeFormer blocks as the transducer predictor.

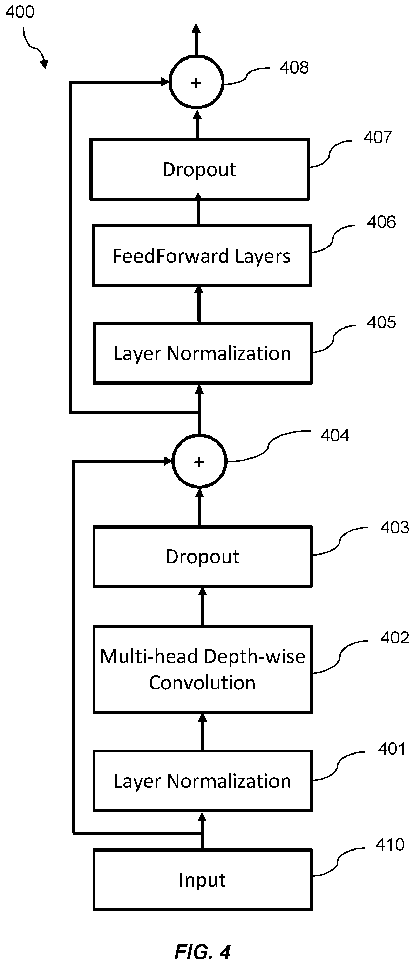

FIG. 3 shows an example of an AFF-T model 300. The AFF-T architecture has an encoder net 301, a predictor net 302 and a joint net 303. The AttFreeFormer block is described in greater detail with reference to FIG. 4. The audio encoder 301 and the predicator net 302 described below both use multiple (n and m, respectively) AttFreeFormer blocks.

The encoder net 301 comprises a sequence of n encoding blocks (i.e. a set of n encoding blocks connected in series). Each of the n encoding blocks is referred to herein as an AttFreeFormer block.

In this example, consecutive segments of audio features $x_{t_i}$ 305 are passed through an acoustic input embedding layer 308 and are input to the encoder net 301. The encoder net outputs a high-order feature representation 310 of the input audio features. The acoustic input embedding layer 308 may be configured to use a convolution subsampling layer to reduce computation.

In some configurations, the predictor net 302 uses m consecutive blocks of the AttFreeFormer (400) described below. In other configurations, the predictor net 302 may use Transformer or Recurrent Neural Network based architectures, such as Long-Short Term Memory (LSTM). The last predicted token $y_{u_i-1}$ 306 produced by the softmax layer 304 is passed through the text embedding layer 309 and is input to the predictor net 302. The predictor net 302 outputs a high-order latent feature representation 311 of the last predicted token 306. The joint net 303 uses feedforward layers and combines the high-order feature representation 310 from the encoder net 301 and the high-order latent feature representation 311 from the predictor net 302. The joint net 303 determines, at each time step, a probability distribution $p(\hat{y}_i|x_1, ..., x_{ti}, y_0, ..., y_{u_{i-1}})$, 307, over possible speech recognition hypotheses for a predetermined set of label tokens after passing through a softmax layer 304. For example, when the natural language of ASR is English, the set of label tokens may comprise the 26 letters of the English alphabet and a plurality of punctuation marks. The joint network 303 may output a set of likelihood values which corresponds one-to-one to the predetermined set of label tokens. Each likelihood value of the set indicates the likelihood of a respective label token. The set of likelihood values may be provided in the form of a vector. The set of label tokens is not limited to any specific known set. In some embodiments of the invention, the label tokens are graphemes (e.g., individual characters, and potentially punctuation and other symbols). The set of label tokens may include workpieces and/or entire words, in addition to or instead of graphemes.

The joint net 303 outputs a posterior probability value (see, for example, https://en.wikipedia.org/wiki/Posterior_probability) for each of the different label tokens. Thus, if there are 1000 different label tokens representing different graphemes or other symbols, the output of the joint network 303 will include 1000 probability values, one for each label token. The softmax layer 304 converts the posterior probability distribution from the joint net 303 to a final probability distribution $p(\hat{y}_i|x_1, ..., x_{ti}, y_0, ..., y_{u_{i-1}})$. The final probability distribution 307 from the softmax layer 304 may be such that the probability values of all classes sum up to 1. Compared to the probability distribution output by the joint net 303, the final probability distribution 307 output by the softmax layer 304 can be easier to interpret by a human. The probability distribution 307 can then be used to determine candidate orthographic elements in a beam search process for determining the transcript 106. The ASR system can be configured for any language by using a set of label tokens of the desired language. For example, a possible configuration for Chinese natural language is to use individual characters as label tokens. The number of different label tokens in this configuration may be 5000.

The AFF-T model 300 described herein can advantageously satisfy the latency constraints for streaming applications. The model also provides a small computational footprint and utilizes less memory compared to conventional ASR architectures. This makes the AFF-T model suitable for performing streaming automatic speech recognition entirely on the user device 113 without a need to send the computation to the remote server, thus avoiding network latency.

FIG. 4 illustrates an example of a AttFreeFormer block 400. The AttFreeFormer block 400 may be one of n AttFreeFormer blocks of the encoder net 301 or one of m AttFreeFormer blocks of the predictor net 302 described above with reference to FIG. 3.

Prior transducer models (such as Conformer transducer or Transformer transducer) use post layer normalization, where normalization is applied after the main neural network operations, i.e., after the encoder or predictor block's operations. In these prior models, the main neural network operations may comprise self-attention layers and feedforward layers.

Conversely, the AttFreeFormer block 400 uses pre-layer normalization, in which the first block's layer normalization 401 is applied to the segments $\{S_i = [x_{t_i}, ..., x_{t_i+w}], i = 0, ..., N\}$ input to the AttFreeFormer block 400. Thus, the layer normalization is applied before the main neural network computation. The layer normalization block 401 thus normalizes the segments $\{S_i, i = 0, ..., N\}$. Further normalisation blocks may be used later in the pipeline (such as block 405) to normalise the preceding block's output. In the other words, the segments $\{S_i, i = 0, ..., N\}$ themselves are normalized only once. The normalisation of the segments is performed prior to processing by the multiple depth-wise convolution processing.

The multi-head depth-wise convolution block 402 can then be applied on the normalized input (i.e. the output of the layer normalization 401) to extract features of different context length to mimic the operation of the self-attention with low computation cost and low latency. The multi-head depth-wise convolution block 402 replaces the computationally expensive attention blocks present in prior works.

Dropout layer 403 is then applied to add robustness and reduce overfitting of the network. The initial input without normalization is added with the output from the dropout layer in addition operation 404. This operation may be referred to as a "residual connection". Another copy of the data is kept after the addition operation 404.

The output is then fed into another layer normalization block 405, followed by two or more feedforward layers 406. The first feedforward layer may be configured to take input of hidden dimension of 512, and map to output of hidden dimension of 2048. An activation function like Rectified Linear Unit (ReLU), or Gaussian Error Linear Unit (GELU), or Squared ReLU may be applied after the first feedforward layer. The second feedforward layer may, for example, be configured to take input of hidden dimension of 2048 and map to output of hidden dimension of 512. A dropout layer 407 may follow after the feedforward layers to reduce overfitting. The output after the addition 404 is added as residual to the output of the dropout layer 407 at 408. To form a complete encoder net 301 or decoder net 302, a number of the AttFreeFormer block may be stacked together.

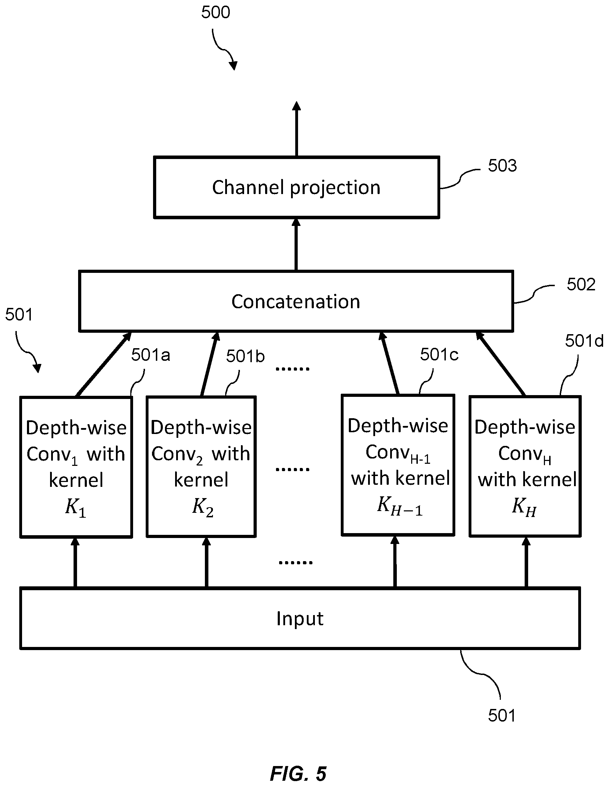

FIG. 5 schematically illustrates a detailed topology of the multi-head depth-wise convolution block 402 (now labelled 500). The multi-head depth-wise convolution block applies multiple depth-wise convolution processes to the sequential acoustic features, or data derived therefrom (for example, after normalisation) to form a series of signals, each signal representing a hypothesis of speech represented by the sequential acoustic features.

The input 501, which in this example comprises the normalized segments $\{S_i, i = 0, ..., N\}$, is passed through each of H heads (shown at 501a, 501b, 501c and 501d) of 1D depth-wise convolutions 501 in parallel to give features $x_i$, as shown in equation (1) below:

$$x_i = \sum k_i * Input \text{ for } i \in (1,2, ..., H) \qquad (1)$$

In this example, each convolution has a different kernel-size $k_i$ so that features with different context length of the utterance can be modelled and extracted. The choice of kernel-size may affect the total reception field of the model. The kernel size may be selected according to the number of AttFreeFormer blocks and desired reception field. Causal padding of zeros may be applied to the input to the depth-wise convolution 501, so that the model can only access past sequences of audio.

The multi-head depth-wise convolution layer may have a variable cache size. This may allow the cache to accommodate data of different intermediate dimensions output from each of the heads. This is in contrast to previous ASR models, which have a constant cache size.

The extracted features $x_i$ from each head of the depth-wise convolution 501 are then concatenated at 502 as shown in equation (2) below:

$$X = [x_1, x_2, ..., x_H] \qquad (2)$$

Channel projection 503 may be applied to the concatenated features $X$ output from block 502 with a feedforward layer, to give an output 'Out', as shown in equation 3 below:

$$Out = \sum X * W \qquad (3)$$

This output represents intermediate information, specifically intermediate extracted features, that is output from the multi-head depth-wise convolution layer.

The model described above has a much smaller model size and much faster inference time when compared with other state-of-the-art models, such as a conformer transducer or transformer transducer, with similar recognition accuracy.

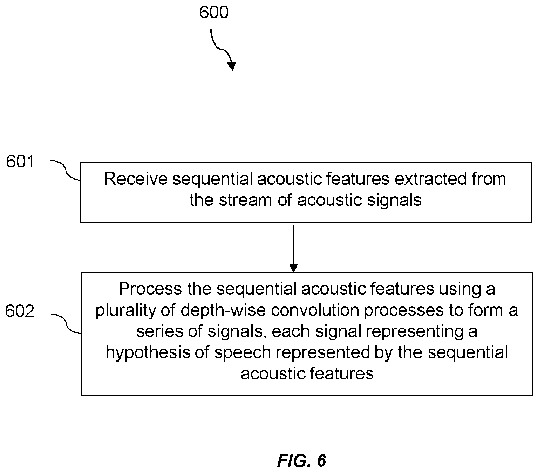

Generally, FIG. 6 shows an example of a computer-implemented method 600 for performing streaming automatic speech recognition for a stream of acoustic signals. At step 601, the method comprises receiving sequential acoustic features extracted from the stream of acoustic signals. At step 602, the method comprises processing the sequential acoustic features using a plurality of depth-wise convolution processes to form a series of signals, each signal representing a hypothesis of speech represented by the sequential acoustic features.

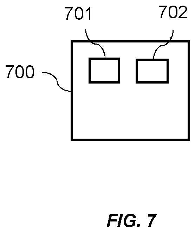

FIG. 7 is a schematic representation of an apparatus 700 configured to implement the ASR system described above and to perform the methods described herein. The apparatus 700 may be implemented on a computer device, such as a laptop, tablet, smart phone or TV.

The apparatus 700 comprises a processor 701 configured to process the sequential acoustic features in the manner described herein. For example, the processor 701 may be implemented as a computer program running on a programmable device such as a Central Processing Unit (CPU). The apparatus 700 also comprises a memory 702 which is arranged to communicate with the processor 701. Memory 702 may be a non-volatile memory. The processor 701 may also comprise a cache (not shown in Figure 7), which may be used to temporarily store data from memory 702. The system may comprise more than one processor and more than one memory. The memory may store data that is executable by the processor. The processor may be configured to operate in accordance with a computer program stored in non-transitory form on a machine readable storage medium. The computer program may store instructions for causing the processor to perform its methods in the manner described herein.

The apparatus may be implemented in edge devices, such as smart phones, smart speakers and smart cars.

As described above, the one or more processors may be configured to implement the AttFreeFormer block of the model using pre-layer normalization, as opposed to post-layer normalization, as is used in prior Transformer-based models, where layer normalization is applied after the main layers, such as the self-attention, multi-head depth-wise convolution and feedforward layers. This may allow the model to achieve better speech recognition accuracy.

As described above, the one or more processors may be configured to implement the AttFreeFormer block of the model by applying a multi-head depth-wise convolution to an acoustic signal. The multi-head depth-wise convolution is configured to extract acoustic features of different context length. This may allow the apparatus to extract meaningful and variable context-length features from the acoustic signal. This may allow the transducer model to reduce the number of parameters (i.e. model size), inference latency and computational costs while keeping good recognition accuracy. The multi-head depth-wise convolution may be configured to contain different kernel-size depth-wise convolution for different heads to model acoustic features of different context-length. The output signal from different heads may be concatenated to form higher dimension acoustic features. The multi-head depth-wise convolution may contain a projection layer to map the extracted higher dimensional acoustic features into the base model dimension. This may allow the model to achieve comparable prediction performance compared to the model that uses self-attention layers while taking much fewer number of parameters, less inference time and computational costs.

The attention-free approach therefore features temporal multiheaded depth-wise convolutions for token mixing, where each head has a different depth-wise convolution kernel. The different kernel-size of different heads provides for modelling of different context lengths. As mentioned above, the kernel-size may depend on number of blocks and the target reception field. The outputs from the multi-head convolutions are concatenated, which can allow the apparatus to form higher dimension acoustic features.

Each depth-wise convolution may be a one-dimensional depth-wise convolution. The depth-wise convolutional processing may comprise processing input data using a causal convolutional padding. This means that the system does not look into acoustic frames in the future and can allow the system to have lower structure latency.

The one or more processors may be configured to perform the AttFreeFormer block using multiple feedforward layers. The multiple feedforward layers may act as squeeze and excitation for the feature space. This operation may reduce the model size and computational costs.

The apparatus described herein may be configured to perform as a voice assistant to understand a user's acoustic input and generate responses. This may allow the apparatus to be implemented in electronic devices having a voice assistant feature, such as smartphones.

In some implementations, the apparatus is configured to receive a sequence of acoustic frames as the input to the speech recognition model and split the acoustic frames into short sequential segments by a sliding fixed-length window. The apparatus may be configured to perform convolution down-sampling to the input acoustic features to form intermediate data and process the intermediate data using one or more of the disclosed AttFreeFormer block, for example as a transducer encoder and/or transducer decoder, to form a series of acoustic signals that entail an estimated likelihood of a range of recognizable acoustic features.

The model may be a trained speech recognition model which receives the stream of acoustic data as input. The apparatus may receive a sequence of acoustic frames which are provided as input to the speech recognition model and may split the acoustic frames into short sequential segments using a sliding fixed-length window. In some embodiments, the apparatus may perform convolution down-sampling to the short sequential segments to form intermediate data and process the intermediate data using a plurality of the disclosed AttFreeFormer blocks as a transducer encoder and/or transducer decoder to form a series of acoustic signals that entail an estimated likelihood of a range of recognizable acoustic features. This may significantly reduce the inference latency and support streaming automatic speech recognition with low number of model parameters, low computational costs and good performance. Furthermore, using a pre-layer normalisation architecture has been found to give improved results compared to the post-layer normalization used in prior transformer techniques.

As mentioned above, the text output from the model is called the transcript of speech. The apparatus is therefore configured to receive an audio signal containing human speech as input and generates the transcript based on the audio signal using the method described above. The audio signal may be digital or analog.

The system can exploit the streaming capability of prior RNN-T models, as RNN-T models do not require future context to perform speech recognition. However, the most widely known Transformer transducer and Conformer transducer RNN-T models are too large, too slow and too computationally expensive to be used on edge devices, like smartphone. The fundamental cause of the large model size and slow inference speed is the self-attention layer of the Transformer-based encoder models. To address this issue, multi-head depth-wise convolution, alongside other optional approaches, is introduced in the present approach to redesign the traditional transducer encoder models into a smaller, lighter and faster one without accuracy regression.

For example, in some implementations, the present approach may achieve 50% less inference latency for a 30% smaller model size, with accuracy similar to state-of-the-art techniques.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

**Claims**

1. An apparatus (113, 700) for performing streaming automatic speech recognition for a stream of acoustic signals (115, 207), the apparatus comprising one or more processors (111, 701) configured to perform steps comprising:

   receiving (601) sequential acoustic features (208) extracted from the stream of acoustic signals (115, 207); and
   processing (602) the sequential acoustic features (208) using a plurality of depth-wise convolution processes (402, 501) to form a series of signals (210), each signal representing a hypothesis of speech represented by the sequential acoustic features (208).

2. The apparatus (113, 700) as claimed in claim 1, wherein the one or more processors (111, 701) are further configured to perform steps comprising:

   identifying a plurality of acoustic segments (209) from the sequential acoustic features (208);
   performing convolutional processing on each acoustic segment (209) to form intermediate data; and
   processing the intermediate data using the plurality of depth-wise convolution processes to form the series of signals (210).

3. The apparatus (113, 700) as claimed in claim 2, wherein the one or more processors (111, 701) are configured to identify the plurality of acoustic segments (209) from the sequential acoustic features (208) by applying a sliding window to the sequential acoustic features (208).

4. The apparatus (113, 700) as claimed in any preceding claim, wherein the plurality of depth-wise convolution processes (402, 501) each comprise applying a depth-wise convolution (501a, 501b, 501c, 501d), each depth-wise convolution having a respective different kernel size.

5. The apparatus (113, 700) as claimed in any preceding claim, wherein the one or more processors (111, 701) are configured to perform the plurality of depth-wise convolution processes (402, 501) on a time-restricted subset of the stream of acoustic data and to thereby form a hypothesis of speech contained within the corresponding acoustic features in that time-restricted subset.

6. The apparatus (113, 700) as claimed in any preceding claim, wherein the plurality of depth-wise convolution processes (402, 501) are attention-free former processes.

7. The apparatus (113, 700) as claimed in any preceding claim, wherein processing the sequential acoustic features (208) using the plurality of depth-wise convolution processes (402, 501) comprises, in order:

   inputting the sequential acoustic features to a first layer normalisation layer (401); and
   inputting the output of the first layer normalisation layer (401) to a multi-head depth-wise convolution layer (402) configured to operate on data output from the first layer normalisation layer (401).

8. The apparatus (113, 700) as claimed in claim 7, wherein the one or more processors (111, 701) are configured to concatenate (502) the outputs of each head (501a, 501b, 501c, 501d) of the multi-head depth-wise convolution (501).

9. The apparatus (113, 700) as claimed in claim 7 or claim 8, wherein processing the sequential acoustic features (208) further comprises inputting the output of the multi-head depth-wise convolution layer (402) to, in order, the following layers:

   a first dropout layer (403);
   a second layer normalisation layer (405);
   one or more feedforward layers (406); and
   a second dropout layer (407).

10. The apparatus (113, 700) as claimed in any of claims 7 to 9, wherein each head (501a, 501b, 501c, 501d) of the multi-head depth-wise convolution (402, 501) is configured to apply a different one-dimensional depth-wise convolution kernel to the output of the first normalization layer (401).

11. The apparatus (113, 700) as claimed in any of claims 7 to 10, wherein the multi-head depth-wise convolution layer (402, 501) has a variable cache size.

12. The apparatus (113, 700) as claimed in any of claims 7 to 11, wherein the multi-head depth-wise convolution (402, 501) includes a channel projection layer to map extracted acoustic features having a higher dimension than a base dimension to the base dimension.

13. The apparatus (113, 700) as claimed in any preceding claim, wherein the plurality of depth-wise convolution processes (402, 501) each comprise a causal convolution padding.

14. The apparatus (113, 700) as claimed in any preceding claim, wherein the processing of the sequential acoustic features (208) using the plurality of depth-wise convolution processes (402, 501) to form the series of signals is performed by a transducer encoder (301) and/or decoder (302).

15. The apparatus (113, 700) as claimed in any preceding claim, wherein the apparatus is configured to receive the stream of acoustic signals (115, 207) from a microphone (110).

16. The apparatus (113, 700) as claimed in any preceding claim, the apparatus being configured to perform as one or more of a speech to text converter, a voice assistant, a caption generator and a voice input system in response to the stream of acoustic signals (207).

17. A computer-implemented method (600) for performing streaming automatic speech recognition for a stream of acoustic signals (115, 207), the method comprising:

receiving (601) sequential acoustic features (208) extracted from the stream of acoustic signals (115 207); and
processing (602) the sequential acoustic features (208) using a plurality of depth-wise convolution processes (402, 501) to form a series of signals (210), each signal representing a hypothesis of speech represented by the sequential acoustic features (208).

18. A computer program comprising instructions that when executed by a computer cause the computer to perform the method (600) of claim 17.

19. A computer-readable storage medium (112, 702) having stored thereon computer readable instructions that when executed by a computer cause the computer to perform the method of claim 17.

**Amended claims in accordance with Rule 137(2) EPC.**

1. An apparatus (113, 700) for performing streaming automatic speech recognition for a stream of acoustic signals (115, 207), the apparatus comprising one or more processors (111, 701) configured to perform steps comprising:

receiving (601) sequential acoustic features (208) extracted from the stream of acoustic signals (115, 207); and
processing (602) the sequential acoustic features (208) using a plurality of depth-wise convolution processes (402, 501) to form a series of signals (210), each signal representing a hypothesis of speech represented by the sequential acoustic features (208),

wherein the one or more processors (111, 701) are further configured to perform steps comprising:

identifying a plurality of acoustic segments (209) from the sequential acoustic features (208);
performing convolutional processing on each acoustic segment (209) to form intermediate data; and
processing the intermediate data using the plurality of depth-wise convolution processes to form the series of signals (210).

2. The apparatus (113, 700) as claimed in claim 1, wherein the one or more processors (111, 701) are configured to identify the plurality of acoustic segments (209) from the sequential acoustic features (208) by applying a sliding window to the sequential acoustic features (208).

3. The apparatus (113, 700) as claimed in claim 1 or claim 2, wherein the plurality of depth-wise convolution processes (402, 501) each comprise applying a depth-wise convolution (501a, 501b, 501c, 501d), each depth-wise convolution having a respective different kernel size.

4. The apparatus (113, 700) as claimed in any preceding claim, wherein the one or more processors (111, 701) are configured to perform the plurality of depth-wise convolution processes (402, 501) on a time-restricted subset of the stream of acoustic data and to thereby form a hypothesis of speech contained within the corresponding acoustic features in that time-restricted subset.

5. The apparatus (113, 700) as claimed in any preceding claim, wherein the plurality of depth-wise convolution processes (402, 501) are attention-free former processes.

6. The apparatus (113, 700) as claimed in any preceding claim, wherein processing the sequential acoustic features (208) using the plurality of depth-wise convolution processes (402, 501) comprises, in order:

   inputting the sequential acoustic features to a first layer normalisation layer (401); and
   inputting the output of the first layer normalisation layer (401) to a multi-head depth-wise convolution layer (402) configured to operate on data output from the first layer normalisation layer (401).

7. The apparatus (113, 700) as claimed in claim 6, wherein the one or more processors (111, 701) are configured to concatenate (502) the outputs of each head (501a, 501b, 501c, 501d) of the multi-head depth-wise convolution (501).

8. The apparatus (113, 700) as claimed in claim 6 or claim 7, wherein processing the sequential acoustic features (208) further comprises inputting the output of the multi-head depth-wise convolution layer (402) to, in order, the following layers:

   a first dropout layer (403);
   a second layer normalisation layer (405);
   one or more feedforward layers (406); and
   a second dropout layer (407).

9. The apparatus (113, 700) as claimed in any of claims 6 to 8, wherein each head (501a, 501b, 501c, 501d) of the multi-head depth-wise convolution (402, 501) is configured to apply a different one-dimensional depth-wise convolution kernel to the output of the first normalization layer (401).

10. The apparatus (113, 700) as claimed in any of claims 6 to 9, wherein the multi-head depth-wise convolution layer (402, 501) has a variable cache size.

11. The apparatus (113, 700) as claimed in any of claims 6 to 10, wherein the multi-head depth-wise convolution (402, 501) includes a channel projection layer to map extracted acoustic features having a higher dimension than a base dimension to the base dimension.

12. The apparatus (113, 700) as claimed in any preceding claim, wherein the plurality of depth-wise convolution processes (402, 501) each comprise a causal convolution padding.

13. The apparatus (113, 700) as claimed in any preceding claim, wherein the processing of the sequential acoustic features (208) using the plurality of depth-wise convolution processes (402, 501) to form the series of signals is performed by a transducer encoder (301) and/or decoder (302).

14. The apparatus (113, 700) as claimed in any preceding claim, wherein the apparatus is configured to receive the stream of acoustic signals (115, 207) from a microphone (110).

15. The apparatus (113, 700) as claimed in any preceding claim, the apparatus being configured to perform as one or more of a speech to text converter, a voice assistant, a caption generator and a voice input system in response to the stream of acoustic signals (207).

16. A computer-implemented method (600) for performing streaming automatic speech recognition for a stream of acoustic signals (115, 207), the method comprising:

   receiving (601) sequential acoustic features (208) extracted from the stream of acoustic signals (115 207); and

processing (602) the sequential acoustic features (208) using a plurality of depth-wise convolution processes (402, 501) to form a series of signals (210), each signal representing a hypothesis of speech represented by the sequential acoustic features (208),

wherein the method further comprises:

identifying a plurality of acoustic segments (209) from the sequential acoustic features (208);
performing convolutional processing on each acoustic segment (209) to form intermediate data; and
processing the intermediate data using the plurality of depth-wise convolution processes to form the series of signals (210).

17. A computer program comprising instructions that when executed by a computer cause the computer to perform the method (600) of claim 16.

18. A computer-readable storage medium (112, 702) having stored thereon computer readable instructions that when executed by a computer cause the computer to perform the method of claim 16.

**FIG. 1**

200

201 — Microphone frontend

202 — Receive audio stream

$s(t)$ ← 207

203 — Convert audio stream into sequential acoustic feature frames

$\{x_t, t = 0, \ldots, T\}$ ← 208

204 — Split into short sequential segments

$\{S_i = [x_{t_i}, \ldots, x_{t_{i+w}}], i = 0, \ldots, N\}$ ← 209

205 — Feed consecutive segments into AttFreeFormer Transducer Model

$\{\hat{y}_i, i = 0, \ldots, N\}$ ← 210

206 — Feed the predicted text into the next pipeline of the system

*FIG. 2*

300

$$p(\hat{y}_i|x_1, \dots, x_{t_i}, y_0, \dots, y_{u_{i-1}})$$ — 307

Softmax — 304

Joint Net — 303

310

311

n x AttFreeFormer as Audio Encoder

301

m x AttFreeFormer as Predictor Net — 302

Acoustic Input Embedding Layer

Text Embedding Layer

308

309

$x_{t_i}$

$y_{u_{i-1}}$

305

306

**FIG. 3**

400

408

407

Dropout

406

FeedForward Layers

405

Layer Normalization

404

403

Dropout

402

Multi-head Depth-wise
Convolution

401

Layer Normalization

410

Input

**FIG. 4**

500

Channel projection ⌐ 503

Concatenation ⌐ 502

501

501a    501b    ......    501c    501d

| Depth-wise Conv$_1$ with kernel $K_1$ | Depth-wise Conv$_2$ with kernel $K_2$ | ...... | Depth-wise Conv$_{H-1}$ with kernel $K_{H-1}$ | Depth-wise Conv$_H$ with kernel $K_H$ |

......

......

Input

501

*FIG. 5*

600

601 — Receive sequential acoustic features extracted from the stream of acoustic signals

602 — Process the sequential acoustic features using a plurality of depth-wise convolution processes to form a series of signals, each signal representing a hypothesis of speech represented by the sequential acoustic features

*FIG. 6*

*FIG. 7*

# EUROPEAN SEARCH REPORT

Application Number

EP 23 15 2871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIMIN LI ET AL: "Small-Footprint Keyword Spotting with Multi-Scale Temporal Convolution", ARXIV.ORG, CORNELL UNIVERSITY LIBRARY, 201 OLIN LIBRARY CORNELL UNIVERSITY ITHACA, NY 14853, 20 October 2020 (2020-10-20), XP081790620, * abstract * * sections 1, 2.1, 2.3.1, 2.3.2 * * figures 1-3 * | 1-8, 10-19 | INV. G10L15/16 G10L15/28 |
| X | ALEKSEI KALINOV ET AL: "CarneliNet: Neural Mixture Model for Automatic Speech Recognition", ARXIV.ORG, CORNELL UNIVERSITY LIBRARY, 201 OLIN LIBRARY CORNELL UNIVERSITY ITHACA, NY 14853, 22 July 2021 (2021-07-22), XP091015412, * abstract * * sections 1, 3, 3.1 * * figure 1 * | 1,7,9, 17-19 | |
| X | LUO JIAN ET AL: "Multi-Quartznet: Multi-Resolution Convolution for Speech Recognition with Multi-Layer Feature Fusion", 2021 IEEE SPOKEN LANGUAGE TECHNOLOGY WORKSHOP (SLT), IEEE, 19 January 2021 (2021-01-19), pages 82-88, XP033891350, DOI: 10.1109/SLT48900.2021.9383532 [retrieved on 2021-03-22] * abstract * * section 2 * * figures 1-3 * | 1,17-19 | TECHNICAL FIELDS SEARCHED (IPC) G10L |

-/--

The present search report has been drawn up for all claims

| Place of search | Date of completion of the search | Examiner |
|---|---|---|
| Munich | 18 April 2023 | Geißler, Christian |

page 1 of 2

**EUROPEAN SEARCH REPORT**

Application Number

EP 23 15 2871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/122121 A1 (HUAWEI TECH CO LTD [CN]; ZHANG ZIXING [DE]) 16 June 2022 (2022-06-16) * page 11, line 32 - page 12, line 11 * * figure 7 * ----- | 1,17-19 | |
| X | WO 2022/226782 A1 (HARMAN INT IND [US]; ZHENG JIANWEN [CN]) 3 November 2022 (2022-11-03) * page 5, line 28 - page 6, line 29 * * figure 1 * ----- | 1,17-19 | |

TECHNICAL FIELDS
SEARCHED       (IPC)

The present search report has been drawn up for all claims

| Place of search | Date of completion of the search | Examiner |
|---|---|---|
| Munich | 18 April 2023 | Geißler, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 15 2871

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2023

| Patent document cited in search report | Publication date | Patent family member(s) | Publication date |
|---|---|---|---|
| WO 2022122121 A1 | 16-06-2022 | NONE | |
| WO 2022226782 A1 | 03-11-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GRAVES, A.** *Sequence Transduction with Recurrent Neural Networks,* 2012, http://arxiv.org/abs/1211.3711
- **VASWANI, A. ; SHAZEER, N. ; PARMAR, N. ; USZKOREIT, J. ; JONES, L. ; GOMEZ, A. N. ; KAISER, L. ; POLOSUKHIN, I.** Attention Is All You Need. *arXiv,* 2017, https://doi.org/10.48550/arxiv.1706.03762
- **GHODSI, M. ; LIU, X. ; APFEL, J. ; CABRERA, R. ; WEINSTEIN, E.** Rnn-Transducer with Stateless Prediction Network. *ICASSP 2020 - 2020 IEEE International Conference on Acoustics, Speech and Signal Processing (ICASSP),* vol. 00, 7049-7053, https://doi.org/10.1109/icassp40776.2020.9054419
- **BOTROS, R. ; SAINATH, T. N. ; DAVID, R. ; GUZMAN, E. ; LI, W. ; HE, Y.** Tied and Reduced RNN-T Decoder. *arXiv,* 2021, https://doi.org/10.21437/interspeech.2021-212
- **ZHANG, Q. ; LU, H. ; SAK, H. ; TRIPATHI, A. ; MCDERMOTT, E. ; KOO, S. ; KUMAR, S.** *Transformer Transducer: A Streamable Speech Recognition Model with Transformer Encoders and RNN-T Loss, https://arxiv.org/abs/2002.02562*
- **GULATI, A. ; QIN, J. ; CHIU, C.-C. ; PARMAR, N. ; ZHANG, Y. ; YU, J. ; HAN, W. ; WANG, S. ; ZHANG, Z. ; WU, Y.** Conformer: Convolution-augmented Transformer for Speech Recognition. *arXiv,* 2020, https://doi.org/10.48550/arxiv.2005.08100